# EUROPEAN PATENT APPLICATION

(11) **EP 3 745 279 A1**
(43) Date of publication of application: **02.12.2020**
(21) Application number: 20177163.1
(22) Date of filing: 28.05.2020
(51) Int. Cl.: G06F 16/25

(54) **SYSTEM AND METHOD OF GENERATING AGGREGATED FUNCTIONAL DATA OBJECTS**

(30) Priority: 29.05.2019 FR 1905718; 23.12.2019 FR 1915437; 23.12.2019 US 201916724577
(71) Applicant: Amadeus S.A.S., 06410 Biot (FR)
(72) Inventor: BRUN, Pierre, 06410 Biot (FR); HAYS, Jean-Chafic, 06410 Biot (FR); FAUDET, Floriane, 06410 Biot (FR); BISEGNA, Tony, 06410 Biot (FR); SPIRITI, Federica, 06410 Biot (FR); LE METAYER, Fabien, 06410 Biot (FR); CLERC-RENAUD, Nicolas, 06410 Biot (FR); CARPENTIER, Thomas, 06410 Biot (FR)
(74) Representative: Samson & Partner Patentanwälte mbB

(57) **Abstract**

A method of aggregating and updating heterogeneous data objects for a client subsystem includes: storing a set of data object definitions, each defining a mapping between an aggregated data object format and a plurality of supplier data object formats; storing a set of update definitions, each defining a mapping between an aggregated update operation and a plurality of supplier update mechanisms; receiving a data object in a supplier data object format; selecting, based on the supplier data object format of the received data object, a data object definition and generating an aggregated data object according to the selected definition; presenting the generated aggregated data object to the client subsystem; receiving an aggregated update operation from the client subsystem for updating the aggregated data object; and selecting, based on the received aggregated update operation, one of the update definitions and initiating a supplier update mechanism according to the selected update definition.

## Description

This specification relates generally to generating data objects, and more particularly to a system and method for generating an aggregated functional data object for a client subsystem from a set of supplier data objects having different data object formats.

### Background

Certain classes of products, including for example travel-related goods and services, may include a number of different types of products. For example, the general class of travel-related goods and services includes products such as flights, hotel reservations, automobile rentals, and the like. Multiple products within a class may be purchased in association with each other by a given user, such as one or more flights and a hotel reservation for a given trip. The individual products, however, may be provided by discrete supplier entities (e.g. airlines, hotels and the like) that employ different data object formats to store and communicate supplier data objects defining the above-mentioned products. Therefore, viewing and interacting with such supplier data objects using a client subsystem, such as a reservation system, typically requires the user (or an entity acting on behalf of the user, such as a travel agency) to accommodate multiple distinct communication protocols, data formats and update mechanisms, which is costly and error-prone.

### Summary

An aspect of the specification provides a method of generating an aggregated functional data object for a client subsystem from a set of supplier data objects having different data object formats, comprising: storing the set of supplier data objects according to their respective data object formats, each supplier data object including a plurality of elements; creating a further data object for linking selected supplier data objects based on common ones of said elements shared between the selected supplier data objects; and creating the aggregated functional data object by merging and combining said common ones of said elements with remaining ones of the plurality of elements from the selected supplier data objects according to said linking, for presentation to the client subsystem.

The method can further comprise: receiving a request from the client subsystem to modify one of the selected supplier data objects and in response one of either creating, deleting or modifying elements of said one of the supplier data objects; updating the linking to reflect any modification of said common ones of said elements; and creating a further aggregated functional data object by merging and combining said common ones of said elements with said remaining ones of the plurality of elements from the selected supplier data objects, including the modified one of the selected supplier data objects, according to the updated linking, for presentation to the client subsystem.

Each of said supplier data objects can include a distribution channel indicator indicative of its data object format.

Each of said supplier data objects can include a record identifier.

Each said record identifier can be maintained in said further data object upon creating the aggregated functional data object.

Creating elements of said one of the supplier data objects can comprise copying one or more common elements from another one of the supplier data objects.

The set of supplier data objects and further data object can use identical serialization.

The aggregated functional object can be presented to the client subsystem using an Application Programming Interface (API) according to a context defined by said one of the data object formats.

Another aspect of the specification provides a transaction processor server, comprising: a memory storing: a set of supplier data objects stored according to respective data object formats, each supplier data object including a plurality of elements; and a processor interconnected with the memory, the processor configured to: create a further data object for linking selected supplier data objects based on common ones of said elements shared between the selected supplier data objects; create an aggregated functional data object by merging and combining said common ones of said elements with remaining ones of the plurality of elements from the selected supplier data objects according to said linking; and present the aggregated functional data object to a client subsystem.

The processor can be further configured to: receive a request from the client subsystem to modify one of the selected supplier data objects and in response one of either create, delete or modify elements of said one of the supplier data objects; update the linking to reflect any modification of said common ones of said elements; create a further aggregated functional data object by merging and combining said common ones of said elements with said remaining ones of the plurality of elements from the selected supplier data objects, including the modified one of the selected supplier data objects, according to said linking; and present the further aggregated functional data object to the client subsystem.

Each of said supplier data objects can include a distribution channel indicator indicative of its data object format.

Each of said supplier data objects can include a record identifier.

The processor can be further configured to maintain each said record identifier in said further data object upon creating the aggregated functional data object.

The processor can be further configured to create elements of said one of the supplier data objects which can comprise copying one or more common elements from another one of the supplier data objects.

The set of supplier data objects and further data object can use identical serialization.

The aggregated functional object can be presented to the client subsystem using an Application Programming Interface (API) according to a context defined by said one of the data object formats.

A further aspect of the specification provides a computer program product comprising program instructions stored on a computer readable medium, for generation of an aggregated functional data object for a client subsystem from a set of supplier data objects having different data object formats, wherein execution of the instructions by a transaction processor server configures the transaction processor server to: store the set of supplier data objects according to their respective data object formats, each supplier data object including a plurality of elements; create a further data object for linking selected supplier data objects based on common ones of said elements shared between the selected supplier data objects; and create the aggregated functional data object by merging and combining said common ones of said elements with remaining ones of the plurality of elements from the selected supplier data objects according to said linking, for presentation to the client subsystem.

### Brief Descriptions of the Drawings

Embodiments are described with reference to the following figures, in which:
FIG. 1 depicts a system for generating an aggregated functional data object according to an aspect of this specification;
FIG. 2 depicts certain internal components of a transaction processor of the system shown in FIG. 1;
FIG. 3 depicts a method of generating an aggregated functional data object according to the system of FIG. 1;
FIG. 4 depicts the receipt of a request from a client subsystem to retrieve one or more supplier data objects and generation of an aggregated data object during the performance of the method of FIG. 3.
FIG. 5 illustrates a method of updating an element of an aggregated functional data object.
FIG. 6 depicts receipt of a request from a client subsystem to update an element of an aggregated functional data object and generation of an aggregated data object during the performance of the method of FIG. 5.

### Detailed Description

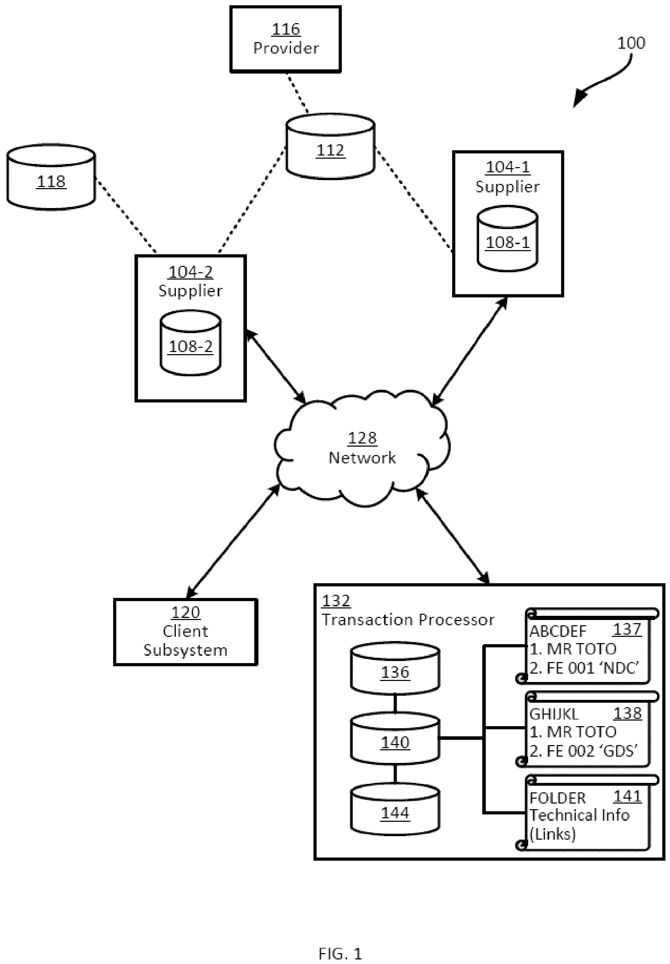

FIG. 1 depicts a system 100 for generating an aggregated functional data object for a client subsystem from a set of supplier data objects having different data object formats. The data objects, in the embodiments discussed herein, define products such as travel-related goods and services such as flights, hotel reservations, vehicle rentals, and related services (e.g. baggage check services for flights, lounge access at airports, WiFi access on flights or at hotels, and so on). For example, in the travel industry, one such data object is known as a Passenger Name Record (PNR), which is a record in the database of a Computer Reservation System (CRS) that contains the itinerary for a passenger, or a group of passengers traveling together.

There is no general industry standard for the layout and content of a PNR. In practice, each CRS or hosting system has its own proprietary standards, although common industry needs including the need to map PNR data easily to ATA/IATA Reservations Interline Message Procedures (AIRIMP) messages has resulted in many general similarities in data content and format between the major systems.

In terms of content, a PNR may include the name of the passenger; contact details for the travel agent or airline office (e.g. an 8-digit IATA code of the travel agency or airline office); ticketing details (e.g. a ticket number); the itinerary of at least one segment and the name of the person providing the information. Once the booking has been completed with the foregoing information, the CRS will issue a unique alphanumeric record locator.

Delivery of the above-mentioned products to customers is typically implemented by a provider entity, such as an airline for flights, a rental agency for vehicle rentals, and the like. Prior to delivery of the products to customers (e.g. passengers on a flight), the products must be purchased or otherwise secured on behalf of the customers, via a series of data exchanges. To that end, the system 100 includes one or more supplier subsystems, of which two examples 104-1 and 104-2 are shown (collectively referred to as supplier subsystems 104, or simply suppliers 104). Data objects maintained by or on behalf of each supplier define the products available for purchase, or already purchased, from the supplier. The above-mentioned data objects are also referred to as supplier data objects in the discussion below.

The supplier subsystems 104 can be, but are not required to be, operated by the above-mentioned providers. For example, the supplier 104-1 may, in the present example, be operated by an airline (i.e. a provider). For instance, the supplier 104-1 may exchange data with other components of the system 100 to enable the provision of products according to the eXtensible Markup Language (XML)-based New Distribution Capability (NDC) standard. The NDC standard was developed in 2012 by IATA to enable airlines to take control of products proposed to end users or travel agents. The supplier 104-1 maintains a repository 108-1 defining product inventory, such as an Order Management System (OMS) containing flights operated by the airline that are available for booking, or have been booked.

Other supplier subsystems 104 can be provided. For example, the supplier 104-2, in the present example, is an airline passenger service system (PSS) that stores product inventory and/or bookings in repository 108-2. The supplier 104-2 exposes IATAPSS applications (based on TTY or Edifact messaging) to allow other components of the system 100 to create, update and display bookings.

The system 100 can include a wide variety of additional supplier subsystems 104, including additional GDS subsystems, and/or additional provider-operated subsystems. For example, the system 100 can include a further GDS-based supplier for low-cost carrier airlines.

The system 100 also includes a client subsystem 120, for example operated by a travel agency or the like, configured to interact with the supplier subsystems 104 via a network 128 including any suitable combination of local- and wide-area networks (including the Internet). The client subsystem 120, as will be discussed in greater detail below, is configured to obtain supplier data objects from the supplier subsystems 104, and to request updates to the supplier data objects in order to book the above-mentioned products on behalf of customers (e.g. individual persons). Additional client subsystems (not shown) may also be included in the system 100.

As will now be apparent, the client subsystem 120 may interact with a number of different supplier subsystems 104 on behalf of any given customer. Each supplier subsystem 104 may store and exchange supplier data objects in divergent formats (e.g. according to different communication standards or protocols, and employing different combinations and hierarchies of fields within the data objects). Further, each supplier subsystem 104 may implement different update mechanisms for purchasing (which may also be referred to as booking) the above-mentioned products, and for making changes to existing purchases.

The heterogeneous nature of the supplier data objects and the update mechanisms provided by the supplier subsystems 104 may impose a substantial technical burden on the client subsystem 120 (and any other client subsystems in the system 100), by requiring that each client subsystem implement communication mechanisms to interact with each supplier subsystem 104. Further, the variable nature of the supplier data objects maintained by the supplier subsystems 104 may lead to inconsistent presentation of information at the client subsystem 120, which in turn may cause erroneous or malformed purchase requests to be transmitted to the supplier subsystems 104.

The system 100 therefore also includes a transaction processor 132 configured to intermediate between the supplier subsystems 104 and the client subsystem 120 (and, more generally, any client subsystem of the system 100), as well as coordinate transactions between different back-end systems 144, as discussed below. The transaction processor 132, as will be discussed below in greater detail, is configured to obtain supplier data objects from one or more supplier subsystems 104 (e.g. in response to a request from the client subsystem 120). The transaction processor 132 is further configured to generate an aggregated functional data object from a set of supplier data objects acquired through different messaging standards, such as NDC for supplier data objects received from supplier 104-1, Edifact or TTY for air content supplier data objects received from supplier 104-2 via GDS messaging, or other protocols such as XML, JSON, for other content received from supplier 104-2 via GDS messaging. To that end, the transaction processor 132 includes a travel platform module 136 and a virtual record handler 140. Travel platform module 136 is the entry point to the transaction processor 132 for the client subsystem 120 and supplier subsystems 104. The travel platform module 136 is responsible for keeping the user (e.g. agent) context whereby a user may open a session to retrieve a PNR or other data object, perform one or more entries on the data object during the session and then commit the session (from memory to long-term storage), although it is also contemplated that that interaction with the travel platform module 136 can be stateless, in which case any action is instantly committed.. For a given session, its purpose is to attach the latest version of the context and forward functional queries to related application servers. The context is stored in memory and retrieved using a session identifier. However, in accordance with an aspect of this specification the functionality of the travel platform module 136 is extended to store multiple data objects in memory (i.e. multi-record context), such as differently formatted NDC and GDS records 137 and 138, as well as a further data object 141, referred to herein as a 'folder', which uses the same technical structure the other data objects. It will be appreciated that although only PNR records 137 and 138 are illustrated, any number of data objects may be stored. Furthermore, the principles set forth herein may be applied to data objects other than PNR records, which are merely exemplary.

The folder data object 141 stores links between the various data objects 137, 138, etc. For example, folder data object 141 may store a link to establish that the passenger data element in one data object identifies the same person (e.g. Mr. Toto in FIG. 1) as the passenger data element in another data object.

Virtual record handler 140 is configured to build an aggregated data object from the multi-record context of the travel platform module 136 by taking elements from multiple data objects 137, 138, etc., and aggregating them using the links stored in the folder data object 141. Thus, the folder data object 141 is used to determine if common elements in disparate data objects need to be merged (e.g. same passenger, etc.) to generate an aggregated data object. That is, folder data object 141 keeps track of the association of elementIDs in each data object.

The transaction processor 132 is also configured to provide aggregated update operations to the client subsystem 120, e.g. in the form of an application programming interface (API). The client subsystem 120 can therefore request any of a variety of updates to the supplier data objects (regardless of the particular format of a given supplier data object) by transmitting an aggregated update request to the transaction processor 132. The transaction processor 132 is configured to generate one or more supplier-specific update operations in response to receiving an aggregated update request from the client subsystem 120, as discussed below.

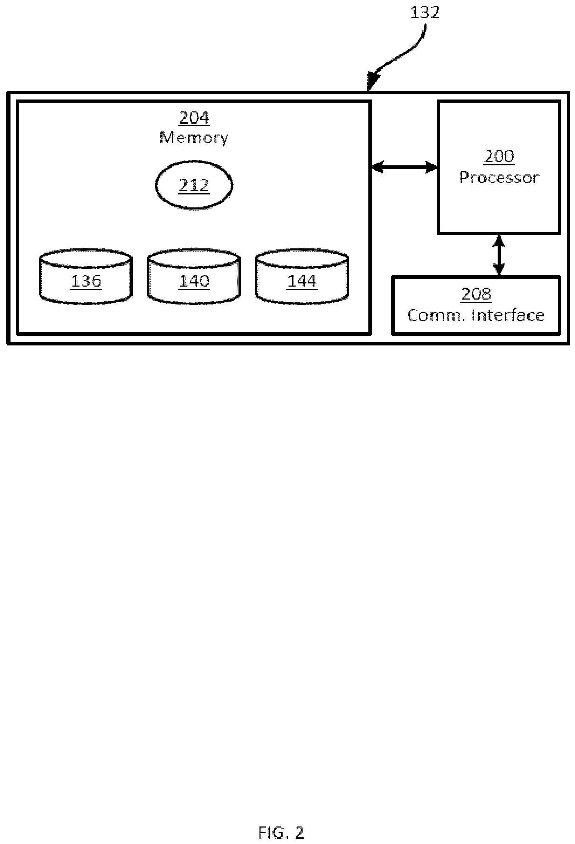

Turning to FIG. 2, before discussing the functionality of the system 100 in greater detail, certain components of the transaction processor 132 will be discussed in greater detail.

As shown in FIG. 2, the transaction processor 132 includes at least one processor 200, such as a central processing unit (CPU) or the like. The processor 200 is interconnected with a memory 204, implemented as a suitable non-transitory computer-readable medium (e.g. a suitable combination of non-volatile and volatile memory subsystems including any one or more of Random Access Memory (RAM), read only memory (ROM), Electrically Erasable Programmable Read Only Memory (EEPROM), flash memory, magnetic computer storage, and the like). The processor 200 and the memory 204 are generally comprised of one or more integrated circuits (ICs).

The processor 200 is also interconnected with a communication interface 208, which enables the transaction processor 132 to communicate with the other computing devices of the system 100 (i.e. the supplier subsystem 104 and the client subsystem 120) via the network 128. The communication interface 208 therefore includes any necessary components (e.g. network interface controllers (NICs), radio units, and the like) to communicate via the network 128. The specific components of the communication interface 208 are selected based on the nature of the network 128. The transaction processor 132 can also include input and output devices connected to the processor 200, such as keyboards, mice, displays, and the like (not shown).

The components of the transaction processor 132 mentioned above can be deployed in a single enclosure, or in a distributed format. In some examples, therefore, the transaction processor 132 includes a plurality of processors, either sharing the memory 204 and communication interface 208, or each having distinct associated memories and communication interfaces.

The memory 204 stores the data objects 137, 138 etc., as well as the folder data object 141 mentioned above in connection with FIG. 1. The memory 204 also stores a plurality of computer-readable programming instructions, executable by the processor 200, in the form of various applications, including an aggregation application 212. As will be understood by those skilled in the art, the processor 200 executes the instructions of the application 212 (and any other suitable applications) in order to perform various actions defined by the instructions contained therein. In the description below, the processor 200, and more generally the transaction processor 132, are said to be configured to perform those actions. It will be understood that they are so configured via the execution (by the processor 200) of the instructions of the applications stored in memory 204. Execution of the application 212, as will be discussed below, configures the transaction processor 132 to generate an aggregated functional data object from a set of supplier data objects having different data object formats, for presentation to the client subsystem 120. Execution of the application 212 also configures the transaction processor 132 to receive aggregated update operations from the client subsystem 120, which can be handled either at the virtual record level, or split down to the physical record level, as discussed in greater detail below, for updating the supplier data objects at one or more of the supplier subsystems 104.

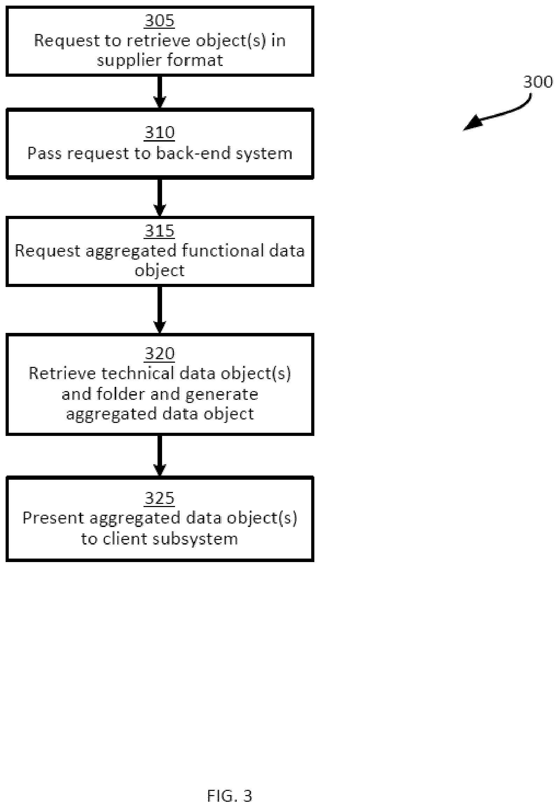

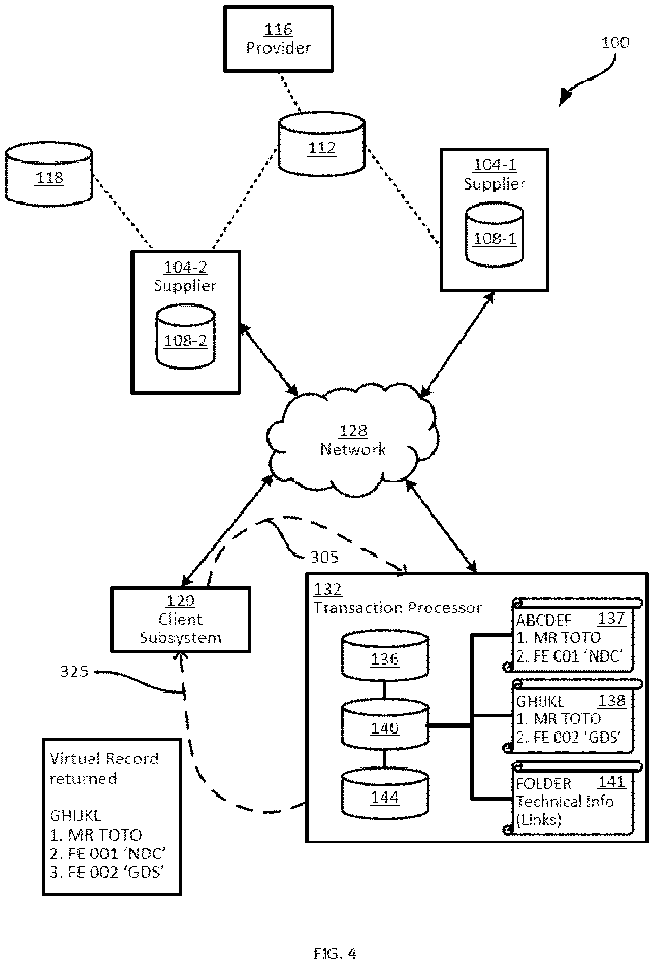

Turning now to FIG. 3, certain aspects of the operation of the system 100 will be described in greater detail. Specifically, FIG. 3 illustrates a method 300 of generating an aggregated functional data object, according to an embodiment. The method 300 will be described in conjunction with its performance within the system 100, as illustrated in FIG. 4. In particular, the blocks of the method 300 are performed by transaction processor 132 via the execution of the application 212 by the processor 200.

At block 305, the transaction processor 132 is configured to receive a request from client subsystem 120 to retrieve one or more supplier data objects, which need not be received from the same supplier 104. For example, the client subsystem 120 may request an itinerary booking for a passenger, Mr. Toto, where one supplier 104-1 provides one flight while another supplier 104-2 provides a second flight, where both flights form part of the itinerary of the passenger.

At block 310, the travel platform module 136 passes the request to a back-end system 144, such as an order view builder. The order view builder, at block 315, formulates a request to the virtual record handler 140 for generating an aggregated functional data object. In response, at block 320, virtual record handler 140 retrieves data objects 137, 138 and 141 and returns a virtual aggregated data object.

In the illustrated example, data objects 137 and 138 comprise technical records acquired through different messaging standards, NDC and Edifact, respectively. NDC PNR (137) contains the following elements: a record identifier: ABCDEF for identifying the PNR record, an element ID for identifying passenger Mr. Toto, and an element ID containing a flight element FE 001 from one supplier (e.g. 104-1), where the descriptor 'NDC' is a distribution channel indicator for indicating that the technical record is acquired through NDC messaging. Similarly, a technical GDS PNR (138) contains the following elements: a record identifier: GHIJKL for identifying the GDS record, an element ID for identifying passenger Mr. Toto, and an element ID containing a flight element FE 002 from another supplier (e.g. 104-2), where the descriptor 'GDS' is a distribution channel indicator for indicating that the technical record is acquired through GDS messaging. Although the technical records 137 and 138 are similar in that they pertain to air content communicated through independent messaging channels, the principles set forth herein apply to other types of technical records pertaining to other content (e.g. hotel, car rental, etc.).

In the example, folder data object 141 contains a link defining an association of the element IDs in each of the supplier data objects 137 and 138 for identifying passenger Mr. Toto as a common element shared between the data objects. The generated virtual aggregated data object includes data elements for identifying the passenger, Mr. Toto, and the two flight elements: FE 001 and FE 002.

At block 325, the aggregated data object is returned to the back-end system 144 (order view builder) which, at block 330, transmits the aggregated data object back to client subsystem 120 for viewing, updating, etc.

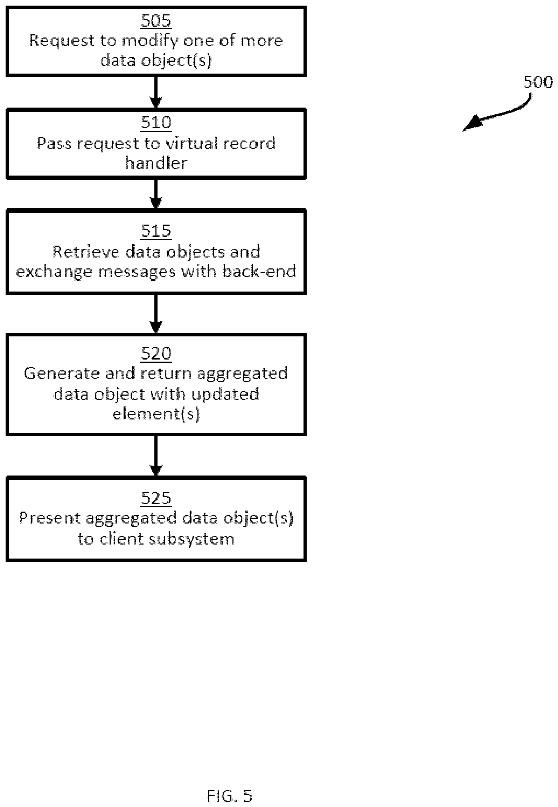

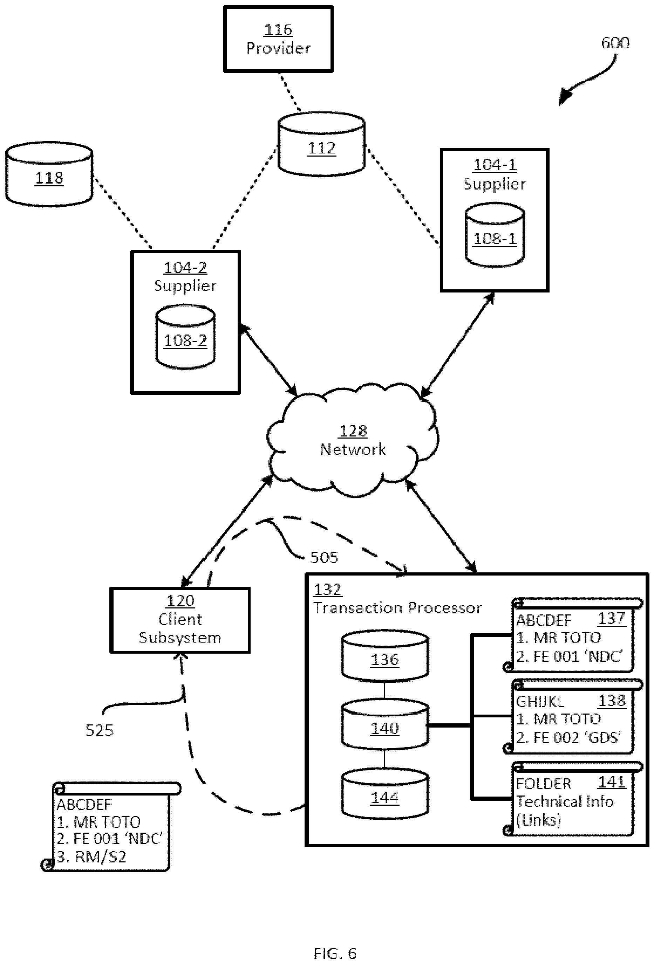

With respect to updating, FIG. 5 illustrates a method 500 of updating an element of an aggregated functional data object, according to an embodiment. The method 500 will be described in conjunction with its performance within the system 600, as illustrated in FIG. 6. In particular, the blocks of the method 500 are performed by transaction processor 132 via the execution of the application 212 by the processor 200.

At block 505, the transaction processor 132 is configured to receive a request from client subsystem 120 to modify one or more supplier data objects. For example, client subsystem 120 may request that a remark linked to FE 001 NDC content be added to a PNR.

At block 510, travel platform module 136 passes the request to the virtual record handler 140 which, at block 515, retrieves data objects 137, 138 and 141 and exchanges messages with back-end system 144 which, in the illustrated example comprises a back-end remarks handling system. The virtual record handler 140 analyzes the request and determines that the remark only needs to be added to the NDC content (e.g. by distributing a query only to the NDC record). The virtual record handler 140 thereby splits the update actions at the physical level and then regenerates the aggregated view to add the updated remark to the NDC content, at block 520, and returns the updated data object for record ABCDEF to travel platform module 136 which, at block 525, transmits the aggregated data object back to client subsystem 120 for viewing, updating, etc.

A person of skill in the art will understand that additional functionality may be provided by the virtual record handler 140 set forth herein. For example, supplier 104-1 or 104-2 may "split" a PNR to add an additional passenger, in which case a conventional system would present to the user two records having two locators (e.g. ABCDEF and GHIJKL). According to the method and system set forth herein, the virtual record handler 140 will aggregate the user view showing both passengers with a single locator.

Those skilled in the art will appreciate that in some embodiments, the functionality of the application 212 at the transaction processor 132 may be implemented using pre-programmed hardware or firmware elements (e.g., application specific integrated circuits (ASICs), electrically erasable programmable read-only memories (EEPROMs), etc.), or other related components. Also, as will be apparent to those skilled in the art, the systems and methods discussed above can also be applied to various other types of data objects (that is, data objects defining a wide variety of other forms of products) and is not limited to travel reservation systems and data objects associated therewith.

The scope should not be limited by the embodiments set forth in the above examples, but should be given the broadest interpretation consistent with the description as a whole.

## Claims

1. A method of generating an aggregated functional data object for a client subsystem from a set of supplier data objects having different data object formats, comprising:
a. storing the set of supplier data objects according to their respective data object formats, each supplier data object including a plurality of elements;
b. creating a further data object for linking selected supplier data objects based on common ones of said elements shared between the selected supplier data objects; and
c. creating the aggregated functional data object by merging and combining said common ones of said elements with remaining ones of the plurality of elements from the selected supplier data objects according to said linking, for presentation to the client subsystem.

2. The method of claim 1, further comprising:
a. receiving a request from the client subsystem to modify one of the selected supplier data objects and in response one of either creating, deleting or modifying elements of said one of the supplier data objects;
b. updating the linking to reflect any modification of said common ones of said elements; and
c. creating a further aggregated functional data object by merging and combining said common ones of said elements with said remaining ones of the plurality of elements from the selected supplier data objects, including the modified one of the selected supplier data objects, according to the updated linking, for presentation to the client subsystem.

3. The method of claim 2, wherein creating elements of said one of the supplier data objects comprises copying one or more common elements from another one of the supplier data objects.

4. The method of any one of claims 1 to 3, wherein each of said supplier data objects includes a distribution channel indicator indicative of its data object format.

5. The method of any one of claims 1 to 3, wherein each of said supplier data objects includes a record identifier.

6. The method of claim 5, wherein each said record identifier is maintained in said further data object upon creating the aggregated functional data object.

7. The method of any one of claims 1 to 6, wherein the data object formats correspond to data acquired through at least one of either New Distribution Capability, NDC, messaging and Global Distribution System, GDS, messaging.

8. The method of any one of claims 1 to 7, wherein the set of supplier data objects and further data object use identical serialization.

9. The method of any one of claims 1 to 8, wherein the aggregated functional object is presented to the client subsystem using an Application Programming Interface, API, according to a context defined by said one of the data object formats.

10. A transaction processor server for generating an aggregated functional data object from a set of supplier data objects having different data object formats, comprising:
a. a memory storing:
i. the set of supplier data objects stored according to respective data object formats, each supplier data object including a plurality of elements; and
b. a processor interconnected with the memory, the processor configured to:
c. create a further data object for linking selected supplier data objects based on common ones of said elements shared between the selected supplier data objects;
d. create an aggregated functional data object by merging and combining said common ones of said elements with remaining ones of the plurality of elements from the selected supplier data objects according to said linking; and
e. present the aggregated functional data object to a client subsystem.

11. The transaction processor server of claim 10, wherein the processor is further configured to perform the method of any one of claims 2 to 9.

12. A computer program product comprising program instructions stored on a computer readable medium to execute the method steps according to any one of the claims 1 to 9 when said program is executed on a computer.
